# EUROPÄISCHE PATENTSCHRIFT

(11) **EP 0 945 349 B1**
(45) Veröffentlichungstag und Bekanntmachung des Hinweises auf die Patenterteilung: **02.01.2004**
(21) Anmeldenummer: 99810243.8
(22) Anmeldetag: 18.03.1999
(51) Int. Cl.: B65B 51/30

(54) **Vorrichtung zum Querschweissen und Trennen eines Verpackungsschlauches aus einer Thermoplastfolie, insbesondere für Schlauchbeutel-Verpackungsmachinen**
Device for transversal sealing and cutting of a thermoplastic packaging tube, especially for tubular bag packaging machines
Dispositif de soudage et de coupe transversal d'un tube en matière thermoplastique, spécialement pour machines de fabrication de sacs tubulaires

(30) Priorität: 27.03.1998 CH 73798
(43) Veröffentlichungstag der Anmeldung: 29.09.1999
(73) Patentinhaber: SIG Pack Systems AG, 8222 Beringen (CH)
(72) Erfinder: Bausch, Günther, 78194 Immendingen (DE); Strasser, Thomas, 8463 Benken (CH)
(74) Vertreter: Clerc, Natalia

(56) Entgegenhaltungen:
- FR-A- 2 230 484
- FR-A- 2 345 347
- US-A- 3 692 613

## Beschreibung

Bei Verpackungsmaschinen, welche Schlauchbeutelpackungen herstellen, werden normalerweise zur Herstellung des Verpackungsschlauches Verbundfolien eingesetzt, die mindestens zwei Schichten aufweisen, wobei die bei der fertigen Packung äussere Schicht einen höheren Schmelzpunkt hat als die inneren Schichten. Dadurch ist das Versiegeln und Trennen leicht möglich. Die Temperatur der Siegelbacken wird auf einer Temperatur unterhalb der Schmelztemperatur der äussersten Schicht aber oberhalb der Schmelztemperatur der innersten Schicht gehalten. Die Einzelbeutel können dabei durch ein in die eine Siegelbacke integriertes Trennmesser voneinander getrennt werden. Ein Beispiel einer derartigen Siegel- und Trennvorrichtung ist in der WO-A-96/17720 beschrieben. Solche Vorrichtungen eignen sich aber weniger für Verpackungen mittels Folien, die nur aus einem einzigen Material bestehen (Monofolien), z.B. aus Niederdruck-Polyethylen (NDPE), weil solche Folien zum Kleben an den Siegelbacken neigen.

FR-A-2 345 347 offenbart eine Vorrichtung mit einem Messer, einer das Messer umgebenden enrsten Schweissbacke und einer gegenüberliegenden, das messer aufnehmenden zweiten Schweissbacke sowie beidseitig der Backen angerodnete Klammbacken. Bei dieser Vorrichtung wird die Folie zuerst mittels der Klemmbacken eingeklemmt und gedeht, anschliessned geschnitten und bei gleichzeitiger Rückstellung der Klemmbacken zusammengeschweisst. Der vorliegenden Erfindung liegt die Aufgabe zugrunde, eine Vorrichtung und ein Verfahren anzugeben, die sich insbesondere für die Trennahtschweissung eignen. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Figur 1: eine Seitenansicht der Vorrichtung in einer Ausgangsstellung, und
- Figuren 2 bis 9: dieselbe Ansicht in nachfolgenden Phasen des Trenn- und Schweissvorgangs.

Die Vorrichtung ist im Einsatz in einer Horizontal-Schlauchbeutel-Verpackungsmaschine dargestellt. Ein bereits längsversiegelter Schlauch 1 aus einer Thermoplastfolie 2, z.B. aus NDPE, wird in Transportrichtung A angeliefert und enthält mit regelmässigen Abständen die zu verpackenden Produkte 3. Die Schweiss- und Trennaht wird im Zwischenraum 4 zwischen den Produkten 3 gebildet.

Die Vorrichtung hat eine obere und eine untere Antriebseinheit 10, 11, die z.B. gemäss WO 96/17720 ausgebildet sein können und über je zwei Kurbeln 12, von denen nur eine dargestellt ist, zwei horizontale Träger 13, 14 parallel zu sich selbst auf Kreisbahnen gegenläufig synchron antreiben. Eine der Kurbeln 12 ist durch einen nicht dargestellten Motor angetrieben. Die übrigen drei Kurbeln 12 sind durch Getriebemittel mit der angetriebenen Kurbel verbunden. Die Drehzahl des Motors ist so gesteuert, dass die Horizontalkomponente der Umlaufgeschwindigkeit der Kurbeln 12 während des Schweiss- und Trennvorgangs annähernd gleich der Transportgeschwindigkeit des Schlauches 1 in Förderrichtung A ist.

An den Trägern 13, 14 ist je eine Schweiss- und Trenneinheit 15, 16 befestigt. Sie umfassen je einen am betreffenden Träger 13, 14 befestigten Halter 17, 18. Am Halter 17 ist unten eine keilförmige Heizschiene 22 unter Zwischenlage von Isolierplatten 23 z.B. aus ZrO₂ befestigt. Die Schiene 22 hat unten einen halbkreisförmigen Querschnitt. Sie wird durch einen Heizstab 24 beheizt. Ein Temperaturfühler 25 misst die Temperatur. Die Heizleistung des Stabes 24 wird so geregelt, dass eine eingestellte Temperatur aufrechterhalten wird. Oberhalb der Isolierplatten 23 hat der Halter 17 mindestens eine Durchgangsbohrung 26 zum Durchleiten von Kühlwasser.

Beidseits des Halters 17 sind an diesem über als Parallelgestänge wirkende, parallele Schwenkarme 27 je eine Halteeinrichtung oder Halteplatte 28 befestigt. Die Schwenkarme 27 und entsprechenden Gelenke 29 sind nur für die linke Platte 28 gezeichnet.

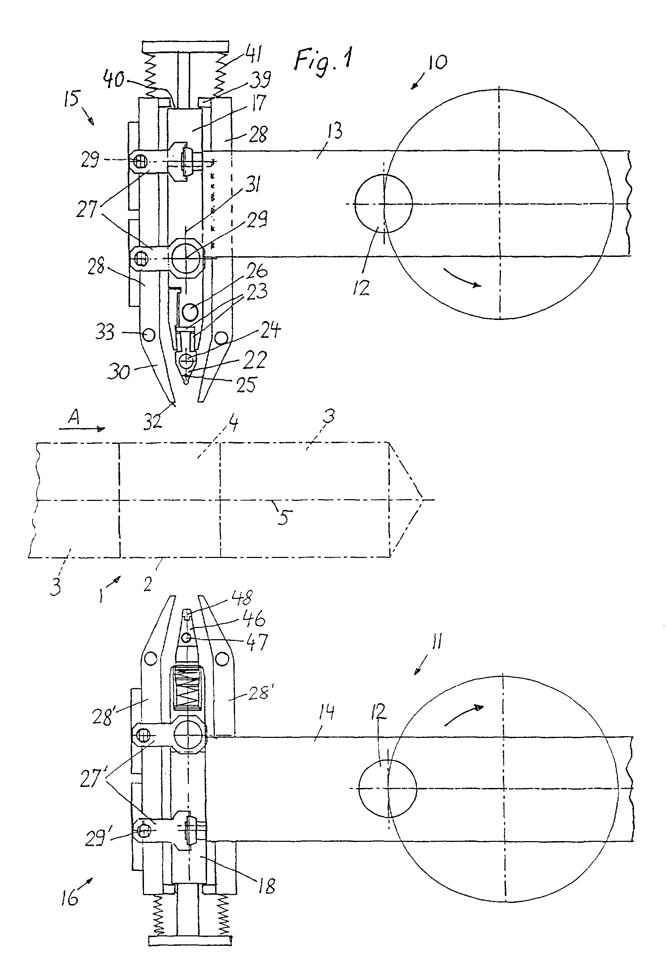

Die rechte Platte 28 ist jedoch in gleicher Weise aber achsial versetzt am Halter 17 befestigt. Der untere Abschnitt 30 der Platten 28 ist keilförmig verjüngt und gegen die Mittelebene 31 des Halters 17 abgekröpft und hat eine ebene, horizontale Stirnfläche 32. Er weist ebenfalls Kühlkanäle 33 zum Durchleiten von Kühlwasser auf. In der in Figur 1 dargestellten Stellung liegen Anschläge 39 der Platten 28 an entsprechenden Anschlagflächen 40 des Halters 17 an. Die Schwenkarme 27 sind annähernd horizontal. Die Platten 28 sind durch Federn 41 gegen die Mittelebene 5 des Schlauches 1 vorbelastet und die Flächen 32 sind unterhalb der Unterseite der Schiene 22.

Die Einheit 16 ist bezüglich der Mittelebene 5 im wesentlichen symmetrisch zur Einheit 15. Analoge Teile sind deshalb mit gleichen Bezugszeichen wie bei der Einheit 15 versehen, jedoch mit Apostroph. Eine detaillierte Beschreibung dieser Teile erübrigt sich daher. Die Einheit 16 unterscheidet sich hauptsächlich dadurch von der Einheit 15, dass sie statt der Schiene 22 und der Platten 23 einen Gegenhalter 46 aufweist, der ebenfalls eine Kühlbohrung 47 hat. Der Gegenhalter 46 ist ebenfalls keilförmig verjüngt und hat oben einen Einsatz 48 aus PTFE, allenfalls mit Glasfaser- oder Kohleeinlagen. Der Gegenhalter 46 ist im Halter 18 vertikal verschiebbar geführt und durch eine Feder 49 gegen die Mittelebene 5 vorbelastet.

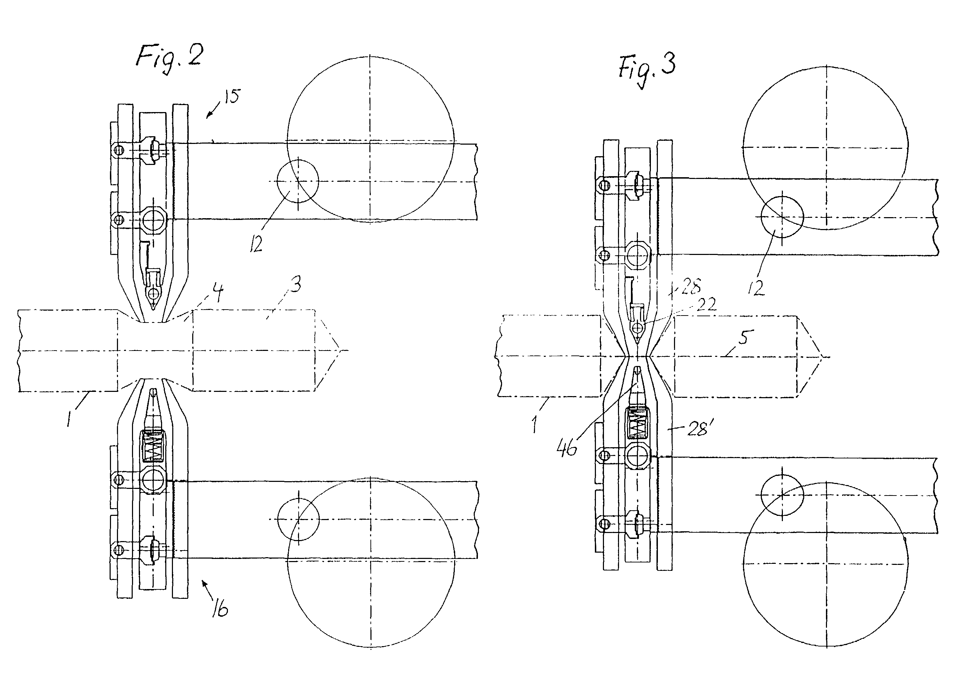

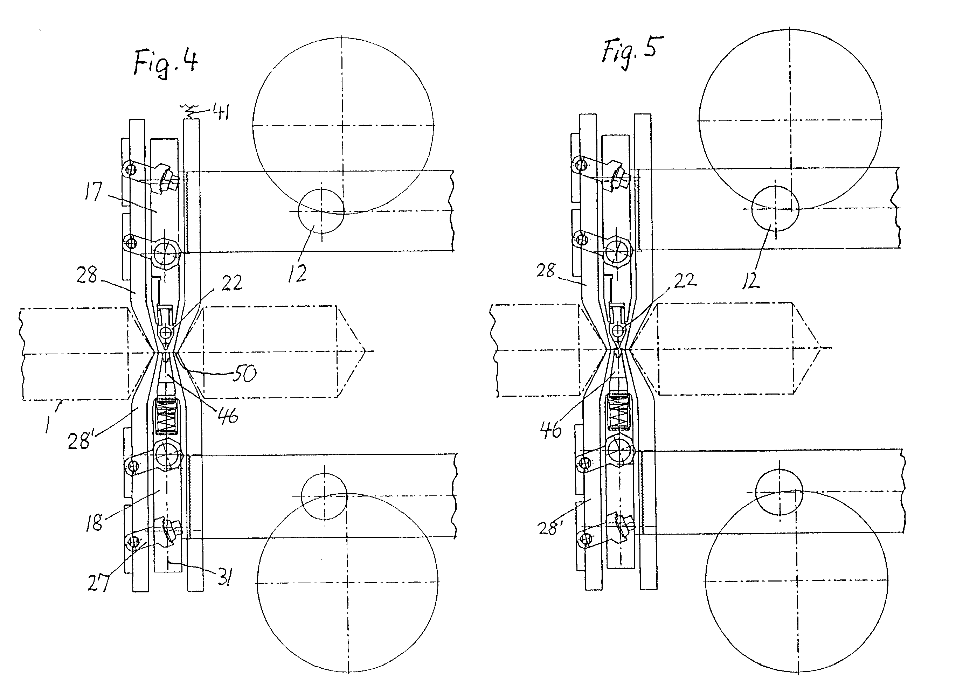

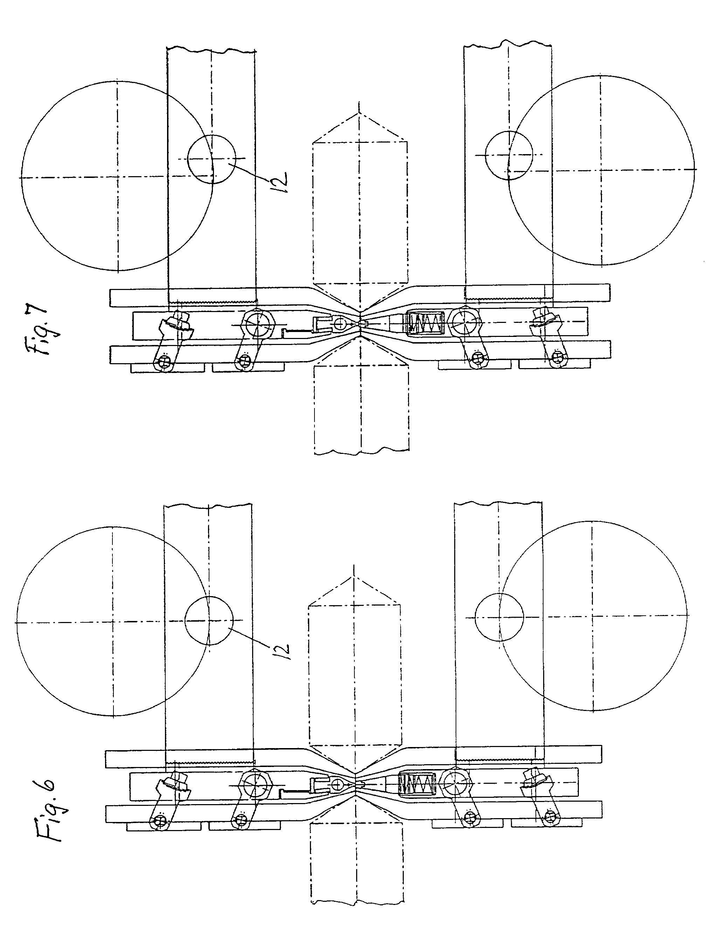

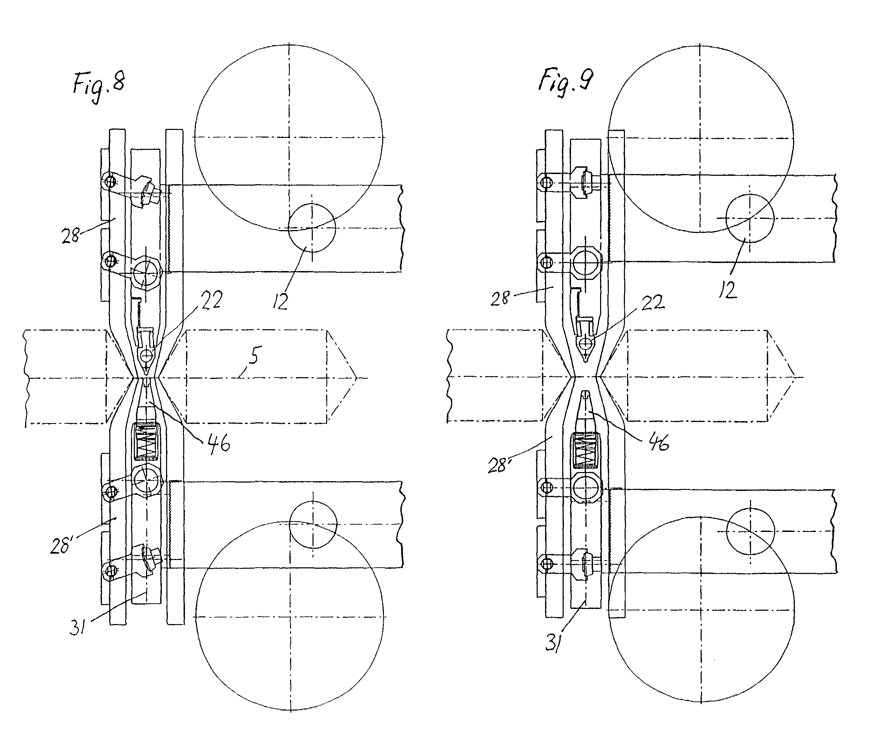

Im Betrieb drehen die Kurbeln 12 in Pfeilrichtung und die Einheiten 15, 16 machen eine kreisende Bewegung parallel zu sich selbst. Bei Annäherung der Einheiten 15, 16 an den Schlauch 1 drücken sie diesen im Zwischenraum zwischen zwei Produkten 3 von beiden Seiten ein (Figur 2). Figur 3 zeigt die Stellung, in welcher der Schlauch 1 gerade zwischen den Stirnflächen 32 der gegenüberliegenden Platten 28, 28' eingeklemmt ist. Die Schiene 22 und der Gegenhalter 46 haben noch Abstand von der Mittelebene 5. Durch die keilförmige Verjüngung und Abkröpfung der Platten 28, 28' braucht der Zwischenraum 4 nicht breit zu sein, so dass wenig Verpackungsmaterial benötigt wird. Beim Weiterdrehen der Kurbeln 12 (Figur 4) verschieben sich die Platten 28, 28' relativ zu den Haltern 17, 18 entgegen der Kraft der Federn 41, so dass der Schlauch 1 zwischen den gegenüberliegenden Platten 28, 28' geklemmt wird und die Schwenkarme 27 verschwenkt werden, so dass die Platten 28, 28' gegen die Mittelebene 31 verschoben werden. Dadurch wird der Abschnitt 50 des Schlauches 1 zwischen den Platten 28, 28' etwas gestaucht. Der Gegenhalter 46 erreicht den Schlauchabschnitt 50 vor der Schiene 22, so dass der Abschnitt 50 etwas angehoben wird (Figur 5), bis die Schiene 22 auf ihn auftrifft. Dadurch wird der Schlauchabschnitt 50 gespannt. Ab dieser Stellung wird der Gegenhalter 46 gegen die Kraft der Feder 49 eingedrückt. Es erfolgt eine Trennschweissung. Figur 6 zeigt die Stellung im Totpunkt der Kurbeln 12. Beim Weiterdrehen der Kurbeln 12 (Figuren 7 bis 9) entfernen sich zunächst die Schiene 22 und der Gegenhalter 46 voneinander und die Platten 28, 28' werden wieder von der Mittelebene 31 wegbewegt.

Mit der beschriebenen Vorrichtung wird eine einwandfreie Verschweissung des Schlauches 1 erreicht, weil dieser flachgepresst ist, bevor die Heizschiene 22 und der Gegenhalter 46 auf ihn auftreffen. Zudem wird eine einwandfreie Trennung der Packungen erreicht, weil die Schlauchabschnitte nach der Verschweissung auseinandergezogen werden. Die Vorrichtung eignet sich sehr gut auch zum Verschweissen von Monofolien z.B. aus PE. Es kann eine gute Nahtqualität erzielt werden. Ein zusätzliches Schneiden ist nicht erforderlich. Die starke Kühlung der Platten 28, 28' hemmt die Verschmutzung durch Trennschweissrückstände.

Abweichend von der beschriebenen Ausführungsform kann die Bewegung der Platten 28, 28' senkrecht zur Mittelebene 31 auch durch andere Steuermittel als das dargestellte Parallelogrammgestänge 27 erreicht werden, z.B. mit Zylindern, die synchron mit dem Drehwinkel der Kurbeln 12 getaktet geschaltet werden. In diesem Fall kann die Bewegung 28 senkrecht zur Ebene 31 während des Haltevorgangs wahlweise auch entweder nur vor oder nur nach dem Durchschreiten des Totpunktes der Kurbeln 12 erfolgen. Dies könnte für gewisse Materialien der Folie 1 Vorteile haben.

## Patentansprüche

1. Vorrichtung zum Querverschweissen und Trennen eines Verpackungsschlauches (1) aus einer Thermoplastfolie (2), insbesondere für Schlauchbeutel-Verpackungsmaschinen, umfassend:
je eine auf gegenüberliegenden Seiten einer Mittelebene (5) des Verpackungsschlauches (1) angeordnete erste und zweite Antriebseinrichtung (10, 11), welche je eine beweglich geführte erste und zweite Schweiss- und Trenneinheit (15, 16) antreiben, wobei die erste Einheit (15) einen mit der ersten Antriebseinheit (10) verbundenen ersten Halter (17) aufweist, der eine beheizbare Schiene (22) trägt sowie zwei beidseitig des ersten Halters (17) beweglich angeordnete erste Halteeinrichtungen (28), deren Abstand voneinander durch Steuermittel (27) variierbar ist, und wobei die zweite Einheit (16) einen mit der zweiten Antriebseinrichtung (11) verbundenen zweiten Halter (18) aufweist, und wobei beidseits des zweiten Halters (18) beweglich angeordnete zweite Halteeinrichtungen (28') angeordnet sind, deren Abstand voneinander mittels zweiter Steuermittel (27') variierbar ist, **dadurch gekennzeichnet, dass** im zweiten Halter (18) ein gefederter, mit der Schiene (22) zusammenwirkender Gegenhalter (46) angeordnet ist und dass die beheizbare Schiene (22) wärmeisoliert am ersten Halter (17) befestigt ist und der erste Halter (17) mit mindestens einer Kühlbohrung (26) versehen ist.

2. Vorrichtung nach Anspruch 1, wobei die beheizbare Schiene (22) und der Gegenhalter (46) im wesentlichen keilförmig ausgebildet sind.

3. Vorrichtung nach einem der Ansprüche 1 oder 2, wobei der Gegenhalter (46) Kühlkanäle (47) aufweist.

4. Vorrichtung nach einem der Ansprüche 1 bis 3, wobei der Wirkbereich der Schiene (22) im Querschnitt eine mindestens angenähert halbkreisförmige Kontur aufweist.

5. Vorrichtung nach einem der Ansprüche 1 bis 4, wobei die Halteeinrichtungen (28, 28') an ihren Enden im Arbeitsbereich zur Schiene (22) bzw. zum Gegenhalter (26) hin abgekröpft sind, derart, dass ein spitzer Winkel zwischen der Mittelebene (5) und den Halteeinrichtungen (28, 28') gebildet ist, und wobei die Halteeinrichtungen (28, 28') vorzugsweise mit Öffnungen (33, 33') versehen sind, durch die ein Kühlmedium geleitet werden kann.

6. Vorrichtung nach einem der Ansprüche 1 bis 5, wobei der Abstand der ersten Halteeinrichtungen mittels einer Steuerung synchron zum Abstand der zweiten Halteeinrichtungen variiert wird.

7. Vorrichtung nach einem der Ansprüche 1 bis 6, wobei die Steuerung der Querbewegung der Halteeinrichtungen (28, 28') mechanisch über ein Parallelogrammgestänge (27, 27') zwischen den Haltern (17, 18) und den Halteeinrichtungen (28, 28') und über Federn (41) erfolgt.

8. Verfahren zum Querverschweissen und Trennen eines Verpackungsschlauches (1) aus einer Thermoplastfolie (2) in einer Vorrichtung für Schlauchbeutel-Verpackungsmaschinen, wobei die Vorrichtung je eine auf gegenüberliegenden Seiten einer Mittelebene (5) des Verpackungsschlauches (1) angeordnete, gegenläufig umlaufende erste und zweite Schweiss- und Trenneinheit (15, 16) aufweist, wobei beide Einheiten (15, 16) je einen Halter (17, 18) und zwei auf gegenüberliegenden Seiten der Mittelebene (31) der Halter (17, 18) angeordnete, relativ zu den Haltern (17, 18) senkrecht und parallel zur Mittelebene (5) bewegliche Halteeinrichtungen (28, 28') haben und der eine Halter (17) eine beheizbare Schiene (22) aufweist und der andere einen damit zusammenwirkenden Gegenhalter (46) aufweist, und wobei das Verfahren folgende Schritte:
a) der erste und zweite Halter (17, 18) werden gegeneinander bewegt, bis die gegenüberliegenden Halteeinrichtungen (28, 28') zwischen sich den Schlauchbeutel (1) einklemmen;
b) die beiden Halter (17, 18) werden weiter gegeneinander bewegt, bis der Schlauch (1) zwischen Schiene (22) und Gegenhalter (46) geklemmt ist;
c) die beiden Halter werden (17, 18) voneinander wegbewegt;
d) gleichzeitig mit Schritt b) werden die Halteeinrichtungen (28, 28') parallel zur Mittelebene (5) gegeneinander bewegt und/oder gleichzeitig mit Schritt c) werden die Halteeinrichtungen (28, 28') parallel zur Mittelebene (5) auseinander bewegt,
e) wobei die Halteeinrichtungen 28, 28' während des Verfahrens gekühlt werden.

9. Verfahren nach Anspruch 8, wobei der Trennvorgang ausserhalb der Mittelebene (5) durchgeführt wird.

## Claims

1. Apparatus for transversely welding and severing a flexible packaging tube (1) made of a thermoplastic film (2), in particular for tubular-bag packaging machines, comprising:
in each case one first and second drive arrangement (10,11) arranged on opposite sides of a centre plane (5) of the flexible packaging tube (1), the drive arrangements driving in each case a first and second welding and severing unit (15, 16) which are guided in a movable manner,
it being the case that the first unit (15) has a first holder (17), which is connected to the first drive unit (10) and bears a heatable rail (22), and two first retaining arrangements (28), which are arranged in a movable manner on both sides of the first holder (17) and the distance between which can be varied by control means (27),
and that the second unit (16) has a second holder (18) which is connected to the second drive arrangement (11) ,
and that provided on both sides of the second holder (18) are second retaining arrangements (28') , which are arranged in a movable manner and the distance between which can be varied by means of second control means (27'), **characterized in that** a spring-mounted abutment (46) which interacts with the rail (22) is arranged in the second holder (18), and **in that** the heatable rail (22) is fastened in a thermally insulated manner on the first holder (17) and the first holder (17) is provided with at least one cooling bore (26).

2. Apparatus according to Claim 1, it being the case that the heatable rail (22) and the abutment (46) are of essentially wedge-shaped design.

3. Apparatus according to either of Claims 1 and 2, it being the case that the abutment (46) has cooling channels (47).

4. Apparatus according to one of Claims 1 to 3, it being the case that the region of action of the rail (22) has an at least more or less semicircular contour in cross section.

5. Apparatus according to one of Claims 1 to 4, it being the case that the retaining arrangements (28, 28') are angled in the direction of the rail (22) and/or the abutment (26) at their ends, in the operating region, such that an acute angle is formed between the centre plane (5) and the retaining arrangements (28, 28'), and that the retaining arrangements (28, 28') are preferably provided with openings (33, 33') through which a cooling medium can be directed.

6. Apparatus according to one of Claims 1 to 5, it being the case that the distance between the first retaining arrangements is varied synchronously, by control means, with the distance of the second retaining arrangements.

7. Apparatus according to one of Claims 1 to 6, it being the case that the transverse movement of the retaining arrangements (28, 28') is controlled mechanically via a parallelogram linkage (27, 27') between the holders (17, 18) and the retaining arrangements (28, 28') and via springs (41).

8. Process for transversely welding and severing a flexible packaging tube (1) made of a thermoplastic film (2) in an apparatus for tubular-bag packaging machines, it being the case that the apparatus has in each case one first and second welding and severing unit (15,16) arranged on opposite sides of a centre plane (5) of the flexible packaging tube (1), the units circulating in opposite directions, and that the two units (15, 16) have in each case one holder (17, 18) and two retaining arrangements (28, 28'), which are arranged on opposite sides of the centre plane (31) of the holders (17, 18) and can be moved relative to the holders (17, 18) perpendicularly and parallel to the centre plane (5), and one holder (17) has a heatable rail (22) and the other has an abutment (46) which interacts therewith, and that the process has the following steps:
a) the first and second holders (17, 18) are moved towards one another until the mutually opposite retaining arrangements (28, 28') clamp in the tubular bag (1) between them;
b) the two holders (17, 18) are moved further towards one another until the flexible tube (1) has been clamped between the rail (22) and abutment (46);
c) the two holders (17, 18) are moved away from one another;
d) at the same time as step b) the retaining arrangements (28, 28') are moved towards one another parallel to the centre plane (5) and/or, at the same time as step c), the retaining arrangements (28, 28') are moved apart from one another parallel to the centre plane (5),
e) the retaining arrangements (28, 28') being cooled during the process.

9. Process according to Claim 8, it being the case that the severing operation is carried out outside the centre plane 5.

## Revendications

1. Dispositif pour le soudage transversal et la coupe d'un tube d'emballage (1) en feuille thermoplastique (2), notamment pour des machines de conditionnement de sacs tubulaires, comprenant:
à chaque fois un premier et un deuxième dispositif d'entraînement (10, 11) disposé sur des côtés opposés d'un plan médian (5) du tube d'emballage (1), lesquels entraînent à chaque fois une première et une deuxième unités de soudage et de coupe (15, 16), la première unité (15) présentant un premier support (17) connecté à la première unité d'entraînement (10), lequel porte un rail chauffable (22) ainsi que deux premiers dispositifs de fixation (28) disposés de manière mobile de part et d'autre du premier support (17) dont l'écartement mutuel peut être modifié par des moyens de commande (27),
et la deuxième unité (16) présentant un deuxième support (18) connecté au deuxième dispositif d'entraînement (11) et des deuxièmes dispositifs de fixation (28') étant disposés de manière mobile de part et d'autre du deuxième support (18), dont l'écartement mutuel peut être modifié par des deuxièmes moyens de commande (27'), **caractérisé en ce que** dans le deuxième support (18) est disposé un support conjugué (46) monté sur ressort, coopérant avec le rail (22), et **en ce que** le rail chauffable (22) est fixé de manière isolée thermiquement sur le premier support (17) et le premier support (17) est pourvu d'au moins un alésage de refroidissement (26).

2. Dispositif selon la revendication 1, dans lequel le rail chauffable (22) et le support conjugué (46) sont réalisés essentiellement en forme de coins.

3. Dispositif selon l'une quelconque des revendications 1 ou 2, dans lequel le support conjugué (46) présente des canaux de refroidissement (47) .

4. Dispositif selon l'une quelconque des revendications 1 à 3, dans lequel le domaine d'action des rails (22) en section transversale présente un contour au moins approximativement semi-circulaire.

5. Dispositif selon l'une quelconque des revendications 1 à 4, dans lequel les dispositifs de fixation (28, 28') sont coudés au niveau de leurs extrémités dans la région de travail en direction du rail (22) ou du support conjugué (26), de telle sorte qu'un angle aigu soit formé entre le plan médian (5) et les dispositifs de fixation (28, 28'), et les dispositifs de fixation (28, 28') étant de préférence pourvus d'ouvertures (33, 33') à travers lesquels un fluide de refroidissement peut être conduit.

6. Dispositif selon l'une quelconque des revendications 1 à 5, dans lequel l'écartement entre les premiers dispositifs de fixation est modifié au moyen d'une commande de manière synchronisée avec l'écartement entre les deuxièmes dispositifs de fixation.

7. Dispositif selon l'une quelconque des revendications 1 à 6, dans lequel la commande du mouvement transversal des dispositifs de fixation (28, 28') s'effectue mécaniquement par le biais d'un système de tiges de parallélogramme (27, 27' ) entre les supports (17, 18) et les dispositifs de fixation (28, 28') et par le biais de ressorts (41).

8. Procédé pour le soudage transversal et la coupe d'un tube d'emballage (1) en feuille thermoplastique (2) dans un dispositif pour des machines de conditionnement de sacs tubulaires, dans lequel le dispositif présente à chaque fois une première et une deuxième unité de soudage et de coupe (15, 16) tournant en sens inverse et disposées sur des côtés opposés d'un plan médian (5) du tube d'emballage (1), les deux unités (15, 16) ayant chacune un support (17, 18) et deux dispositifs de fixation (28, 28' ) disposés sur des côtés opposés du plan médian (31) des supports (17, 18), mobiles par rapport aux supports (17, 18) perpendiculairement et parallèlement au plan médian (5), et l'un des supports (17) présentant un rail chauffable (22) et l'autre présentant un support conjugué (46) coopérant avec lui, et le procédé présentant les étapes suivantes :
a) les premier et deuxième supports (17, 18) sont déplacés l'un vers l'autre jusqu'à ce que les dispositifs de fixation opposés (28, 28') coincent entre eux le sac tubulaire (1) ;
b) les deux supports (17, 18) sont déplacés d'avantage l'un vers l'autre, jusqu'à ce que le tube (1) soit serré entre le rail (22) et le support conjugué (46) ;
c) les deux supports (17, 18) sont écartés l'un de l'autre ;
d) simultanément à l'étape b), les dispositifs de fixation (28, 28') sont déplacés l'un vers l'autre parallèlement au plan médian (5) et/ou simultanément à l'étape c) les dispositifs de fixation (28, 28') sont écartés l'un de l'autre parallèlement au plan médian (5),
e) les dispositifs de fixation (28, 28') étant refroidis pendant le procédé.

9. Procédé selon la revendication 8, dans lequel l'opération de coupe est réalisée en dehors du plan médian (5).
